# FASCICULE DE BREVET EUROPEEN

(11) **EP 1 543 919 B1**
(45) Date de publication et mention de la délivrance du brevet: **16.08.2006**
(21) Numéro de dépôt: 04106511.1
(22) Date de dépôt: 13.12.2004
(51) Int. Cl.: B23Q 7/04, B23Q 39/02

(54) **Machine et procédé d'usinage d'un profile de grande longueur**
Maschine und Verfahren zur Bearbeitung eines langen Profilwerkstückes
Machine and process for machining a long profiled workpiece

(30) Priorité: 15.12.2003 FR 0351057
(43) Date de publication de la demande: 22.06.2005
(73) Titulaire: AIRBUS France, 31060 Toulouse (FR)
(72) Inventeur: HAMANN, Jean-Christophe, 44500 LA BAULE (FR); PROVIN, Mael, 44160 BESNE (FR)
(74) Mandataire: Poulin, Gérard

(56) Documents cités:
- FR-A- 2 799 673
- US-A- 5 127 139
- US-A- 5 343 603

## Description

Le sujet de la présente invention est une machine d'usinage d'un profilé de grande longueur et un procédé correspondant (voir, par exemple, US-5 343 603-A); le terme d'usinage est défini pour comprendre ici, outre les opérations classiques d'enlèvement de matière comme le fraisage, le détourage, le perçage, le découpage, etc., d'autres comme le marquage, l'assemblage, le soudage ou la pose de fixations comme des rivets, avec à chaque fois un outil approprié.

De tels profilés de grande longueur à usiner sont employés par exemple dans l'aéronautique pour former des renforts d'enveloppe d'aéronef ; ils peuvent être droits ou cintrés, selon une portion de cercle ou selon un rayon évolutif, notamment s'ils doivent former des cadres. Certaines difficultés de leur usinage proviennent d'écarts importants (pouvant atteindre plusieurs millimètres) entre leurs cotes nominales et leurs cotes réelles et de leur souplesse, qui laisse apparaître des déformations importantes quand les efforts d'usinage sont appliqués. L'usinage peut aussi provoquer ou libérer, selon le cas, des contraintes internes, et donc d'autres déformations. La forme réelle du profilé n'est donc pas déterminée avec une précision permettant d'accomplir les usinages directement, et elle varie encore pendant ces usinages. Un recalibrage manuel final est nécessaire pour amener le profilé à la forme voulue.

Une possibilité d'usiner le profilé consiste à le serrer dans plusieurs mandrins fixes, dont les positions correspondent à une forme théorique du profilé, et à amener les outils successivement aux endroits à usiner. Les mandrins doivent être assez rigides pour résister aux efforts qui apparaissent. Cette façon de procédé est difficile à mettre en oeuvre avec une précision suffisante pour les profilés de plusieurs mètres.

Des machines spéciales à commande numérique ont aussi été conçues. Les brevets français 2 685 239 et 2 799 673 divulguent deux d'entre elles. Elles comprennent essentiellement une paire de mandrins de serrage du profilé, dont la distance est faible, pour isoler entre eux ce qu'on appelle une fenêtre comprenant une petite longueur du profilé, sur laquelle l'usinage est fait. Les mandrins ont pour fonction de placer la portion du profilé incluse dans la fenêtre à sa forme théorique et de l'y maintenir pendant l'usinage, le reste du profilé étant libre. Quand l'usinage est fini, un des mandrins est desserré et l'autre est déplacé par une commande automatique en continuant de serrer le profilé avec lui ; une commutation du serrage des mandrins permet ensuite de ramener le mandrin mobile près de l'autre sans bouger le profilé, dont une nouvelle portion est alors incluse dans la fenêtre et peut être usinée à son tour.

De telles machines représentent un progrès sensible. Elles sont peu encombrantes et peu compliquées, ne présentant que la paire de mandrins en plus du porte-outil. Elles permettent des montages et des démontages rapides du profilé ; et en fournissant une rigidité suffisante à la portion des profilés incluse dans la fenêtre, elles permettent des usinages plus précis et à vitesse de coupe plus rapide qui améliorent la qualité de l'usinage et réduisent les déformations infligées au profilé grâce à l'atténuation des vibrations et des efforts de coupe.

Ces machines ne conviennent pourtant pas pour tous les profilés. Des limites de bon fonctionnement peuvent apparaître pour les profilés les plus longs ou dont le cintre est important, car le guidage par les mandrins devient alors difficile. Et comme les imprécisions de chaque mouvement des mandrins s'accumulent le long du profilé, les derniers usinages risquent d'être faits avec un décalage longitudinal excessif.

L'invention a été conçue d'après ces insuffisances et consiste, sous sa forme la plus générale, en une machine d'usinage d'un profilé de grande longueur, comprenant un porte-outil, une paire de mandrins de serrage, mobiles le long du profilé, et des mécanismes de déplacement des mandrins et du porte-outil, caractérisée en ce qu'elle comprend un support du profilé, comprenant une structure stationnaire, et des mandrins stationnaires de serrage du profilé, montés sur la structure stationnaire par des liaisons souples.

Par rapport à l'art connu, la présente machine reprend la conception à mandrins mobiles de serrage du profilé pour délimiter une fenêtre d'usinage, mais les mandrins mobiles ne déplacent pas le profilé, qui demeure stationnaire sur les mandrins de support : ils se déplacent avec le porte-outil tout au long du profilé, encore pour placer à la forme théorique les portions du profilé qu'ils enserrent successivement, mais sans produire d'erreur cumulée importante pendant leurs déplacements. Les mandrins stationnaires du support sont munis de liaisons souples pour suivre les déplacements imposés au profilé par les mandrins mobiles et les variations des déformations, sans produire de contraintes internes. Les mandrins mobiles peuvent être déplacés jusqu'à des positions définies à l'avant par des marqueurs, c'est-à-dire par rapport à une référence fixe, qui donnent une meilleure précision comparativement aux machines travaillant par incréments de déplacement que les brevets français susmentionnés décrivent.

La souplesse de montage des mandrins stationnaires évite l'hyperstaticité qui risquerait d'apparaître en cumulant des mandrins stationnaires rigides et des mandrins mobiles rigides, surtout dans un usinage automatisé où les possibilités de contrôle et d'intervention en cas de dommage ou de déformation excessive du profilé seraient réduites.

Un cas particulier important est celui des profilés cintrés. La machine comprend alors avantageusement une colonne centrale stationnaire à laquelle la structure stationnaire est attachée, une paire de bras tournant autour de la colonne et finissant respectivement sur les mors mobiles, et un portique appartenant au porte-outil et soutenu par la colonne et par un rail circulaire concentrique à la colonne.

On conçoit que des bras tournants peuvent aisément être commandés à des positions angulaires déterminées. Le portique ne cesse d'être bien soutenu à ses deux extrémités et peut ainsi réagir à des efforts de coupe importants.

La structure stationnaire est favorablement composée de bras formés de portions coulissantes dont la longueur totale est réglable : ils peuvent ainsi s'ajuster à des profilés différents, notamment de diamètres différents et/ou de rayon évolutif, dans le cas précédemment considéré d'une machine à colonne centrale stationnaire, à laquelle aboutissent alors tous ces bras dans une disposition rayonnante.

Les mandrins mobiles et leurs supports peuvent être analogues aux mandrins stationnaires, si ce n'est que les mandrins mobiles doivent pouvoir imposer une position déterminée à la portion du profilé présente dans la fenêtre. Dans le cas courant d'un profilé plan, il est avantageux que les mandrins mobiles soient montés sur des supports indépendants et déformables, par exemple aussi en forme de bras rayonnants formés de portions coulissantes, aptes à déplacer les mandrins mobiles perpendiculairement au profilé dans leur plan et aussi à les faire tourner autour d'un axe perpendiculaire à ce plan, tout en devenant rigides quand les positions voulues des mors on été atteintes.

Enfin, un mode de fonctionnement simple, facilitant le déplacement de mors mobiles, est obtenu si les mors stationnaires sont munis d'un mécanisme permettant de les escamoter.

L'invention concerne encore un procédé d'usinage d'un profilé de grande longueur, accompli avec une machine à commande numérique comprenant une paire de mandrins mobiles enserrant des portions successives du profilé et un outil placé entre les mandrins mobiles, caractérisé en ce que le profilé reste retenu sur un support à une position sensiblement fixe, et les mandrins mobiles et l'outil se déplacent le long du profilé sur toute une longueur à usiner.

L'invention sera maintenant décrite en liaison aux figures annexées à cette description :
- la figure 1 est une vue de dessus de la machine,
- la figure 2 est une vue de côté de la machine,
- la figure 3 est une vue d'un mandrin mobile de serrage,
- la figure 4 est une vue d'un bras porteur d'un des mandrins mobiles de serrage,
- la figure 5 est une vue d'un bras stationnaire porteur d'un des mandrins stationnaires de support,
- et la figure 6 est une vue d'un mandrin stationnaire et des portions voisines du bras.

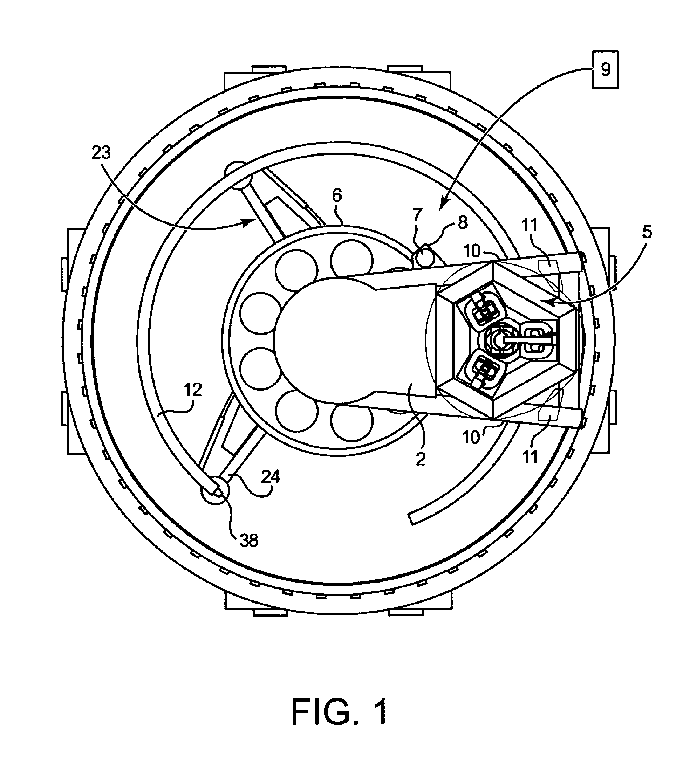

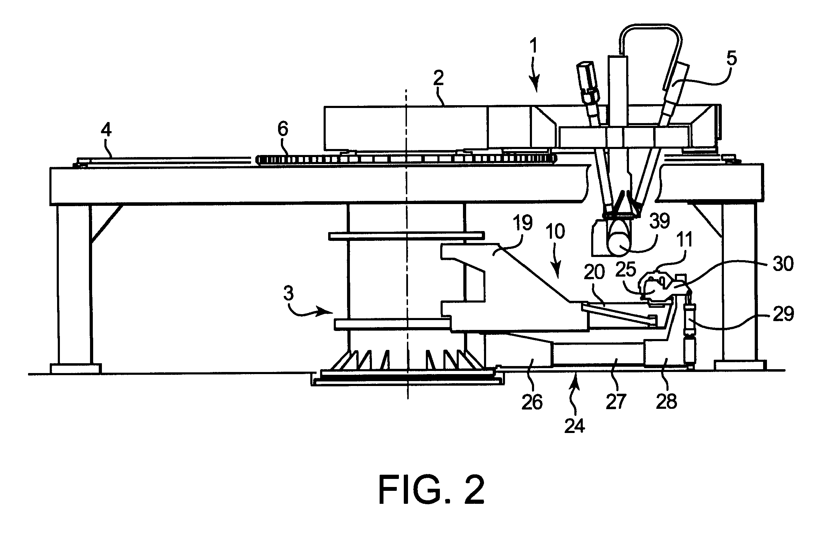

La machine comprend d'abord (figures 1 et 2) un portique 1 comprenant une traverse supérieure 2, une colonne 3 centrale et une piste 4 circulaire concentrique. La traverse 2 porte un porte-outil 5 pouvant être à axes multiples et qui est muni d'un outil d'usinage (dans la définition indiquée au début). Le porte-outil 5 peut déplacer l'outil 39 dans un volume d'usinage assez important sous le portique 1. La traverse 2 est déplacée par rotation autour de la colonne centrale 3 par un système à pignon et crémaillère sans jeu composé d'une couronne dentée 6 fixée à la colonne centrale 3 et d'un pignon 7, entraîné par moteur pas à pas 8 et solidaire de la traverse 2. Le déplacement en rotation de la traverse 2 peut être continu ou discontinu, comme on le verra. La machine comprend de toute façon une commande numérique 9 qui n'est que symbolisée ici et qui peut déterminer à chaque instant la position et le déplacement de la traverse 2. Des codeurs et des indexeurs mécaniques peuvent être utilisés, ou encore d'autres moyens connus pour suivre le déplacement de la traverse 2 ou l'arrêter à certaines positions. Les usinages peuvent être accomplis à l'arrêt de la traverse 2 ou encore lorsqu'elle se déplace.

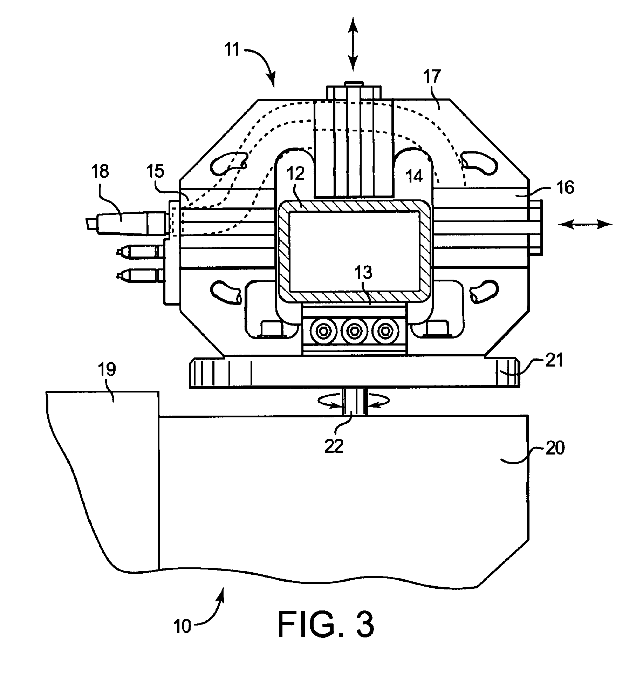

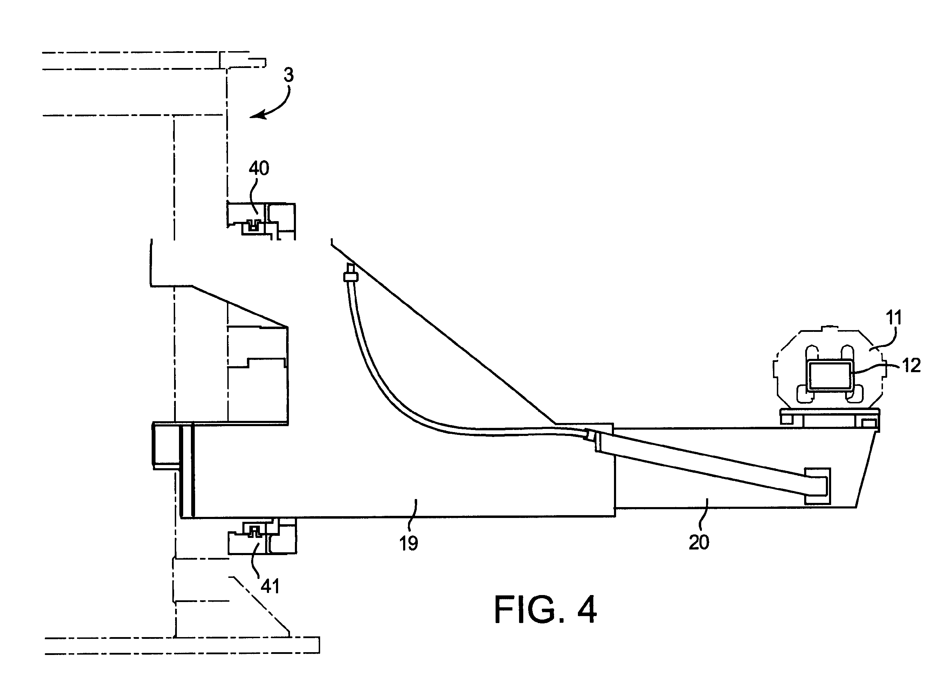

La machine comprend encore une paire de bras 10 (figures 1, 2, 3 et 4) soutenus par la colonne 3 sous la traverse 2 et porteurs de mandrins 11 à leur extrémité éloignée de la colonne 3. Les mandrins 11 sont affectés au serrage du profilé 12. Ils sont équipés de mors de mise en position et de serrage, dont la disposition et la forme sont appropriées à la section du profilé 12. Dans le cas représenté ici (figure 3) d'un profilé 12 quadrilatéral, on trouvera un mors vertical fixe 13, un mors vertical mobile 14 opposé au précédent, un mors horizontal fixe 15 et un mors horizontal mobile 16 opposé au précédent, tous ces mors étant placés sur un support 17 en arc. Les mors fixes 13 et 15 fournissent une référence de position par l'appui du profilé 12, et les mors mobiles 14 et 16, actionnés par des vérins hydrauliques dont le liquide en pression est contenu dans des conduits 18, s'appuient sur les deux autres faces du profilé 12 et complètent le serrage. Les bras 10 sont composés d'une portion 19 reliée à la colonne centrale 3, d'une portion 20 prolongeant la précédente et coulissant en elle et d'un plateau 21 relié à la portion 20 par un pivot 22 vertical. Un mouvement de déploiement de la portion 20 en direction radiale, de même qu'un pivotement du plateau 22 autour de l'axe vertical, sont commandés par la commande numérique 9 pour ajuster le rayon et la direction de la portion du profilé 12 que le mandrin 11 enserre. Les deux bras 10 et les deux mandrins 11 sont commandés indépendamment. Quand ils enserrent tous les deux le profilé 12, ils définissent une fenêtre d'usinage entre eux, dans laquelle l'outil 39 opère, tout en maintenant le profilé 12 à sa position théorique à cet endroit.

Les bras 10 sont soutenus par une paire de rails circulaires 40 et 41 dont est munie la colonne 3. Ils peuvent aussi être déplacés sur lesdits rails 40 et 41 autour de la colonne 3, de manière continue ou non, par la commande numérique 9 par des moyens analogues à ceux de la traverse 2.

Nous passons maintenant à la description des moyens de support du profilé 12 (figures 1, 2, 5 et 6). Ils portent la référence générale 23 et se composent de bras 24 et de mandrins 25 stationnaires. Les bras 24 comprennent une portion 26 d'emmanchement reliée à la colonne centrale 3, une portion 27 médiane prolongeant la précédente et qui lui est fixée, une portion d'extrémité 28 fixée à la précédente et porteuse du mandrin 25 au sommet d'une colonnette 29. Les portions d'extrémité 28 peuvent être remplacées facilement par des portions analogues mais présentant une colonnette 29 de hauteur différente ou des mandrins 25 de forme différente selon la section du profilé ou le genre d'usinage à accomplir.

La portion d'emmanchement 26 peut être tournée autour de la colonne 3 en glissant sur une paire de rails 42 et 43 circulaires dont elle est munie. La portion médiane 27 peut être déployée de la portion d'emmanchement 26. La portion d'extrémité 28 peut tourner par rapport à la portion médiane 27 autour d'un axe 44 vertical. Tous ces mouvements sont des réglages accomplis avant l'usinage pour placer le mandrin 25 à la position voulue et s'adapter à une courbure variable du profilé 12 ; ils sont arrêtés ensuite par des vis de blocage non représentées. Un support 45 anti-vibratoire est intercalé entre le bout du bras 24 et le sol.

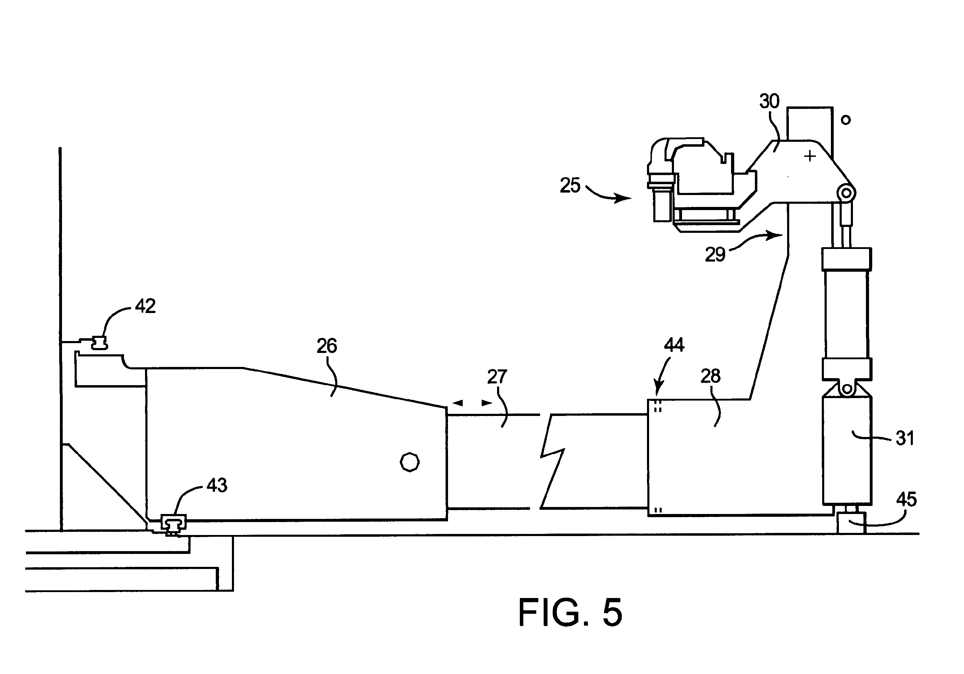

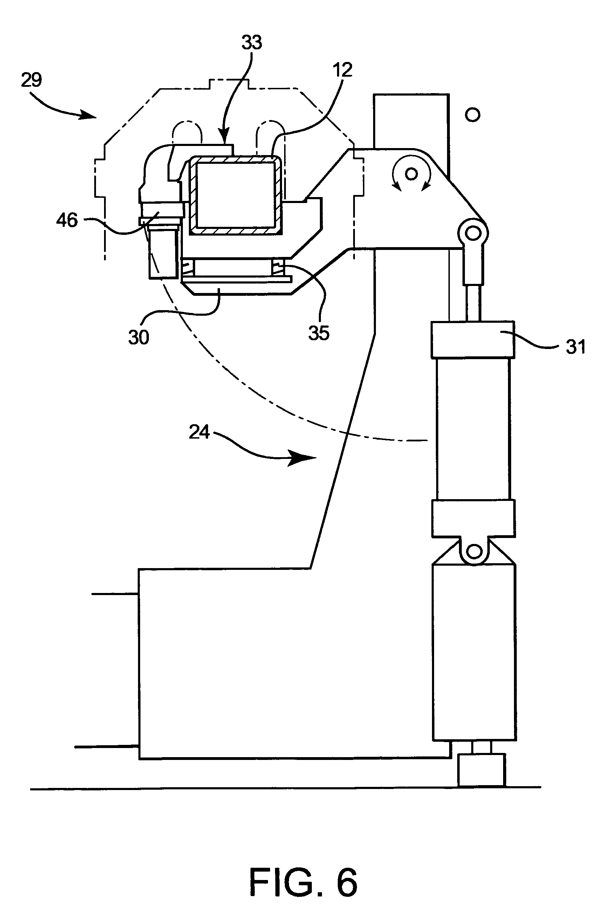

Un levier 30 articulé au sommet de la colonnette 29 porte le mandrin 25. Un vérin 31 est disposé entre une extrémité du levier 30 et un point fixe de la portion d'extrémité 28. Le mandrin 25 peut exercer un serrage plus lâche que les mandrins 11 associés à l'usinage : on pourra donc le construire avec un mors fixe 32 à empreinte supérieure comprenant deux faces latérales et une face inférieure d'appui du profilé 12, et un mors de serrage 33 basculant sous l'effet d'un vérin à hydraulique 46 pour donner un mors de serrage supérieur et maintenir le profilé 12 dans l'empreinte. Un élément essentiel est que l'empreinte 32 est montée de façon souple (ou "compliante" d'après une dénomination fréquente dans cette technique) sur le levier 30, par l'intermédiaire de blocs élastiques 35 qui autorisent des mouvements du profilé 12 dans le plan des figures 5 et 6, en direction radiale et autour d'un axe vertical. Le support s'adapte ainsi aux déformations subies par le profilé 12 pendant l'usinage et évite de lui transmettre des efforts excessifs, tout en maintenant une mise en position suffisante, notamment dans le plan horizontal, du profilé 12. Le vérin 31 est utilisé pour escamoter le mandrin 25 en l'abaissant, le mors de serrage 33 étant relevé, et dégager le profilé 12 en évitant toute collision avec les mandrins mobiles 11 pendant leur déplacement le long du profilé 12.

Il convient encore de mentionner, parmi les bras de support 24, un qui est un peu différent puisqu'il ne porte pas de mandrin 25 mais une butée 38 destinée à caler une extrémité du profilé 12 et à fournir ainsi une référence de position à la machine.

Trois processus d'usinage peuvent être employés. Le premier peut être appelé "par mailles et fenêtrages successifs" et comprend les étapes suivantes. Le profilé 12 est placé sur les supports constitués par les mandrins fixes 25. L'une de ses extrémités peut être mise en appui sur une butée 38. Les mandrins fixes 25 sont serrés. Les mandrins mobiles 11 sont placés à une portion de début d'usinage du profilé 12 et serrés de manière à délimiter une première fenêtre d'usinage. Le portique 1 vient alors se placer à une position indexée au-dessus de la fenêtre, et l'usinage est réalisé par le porte-outil 5, le portique 1 restant fixe. Après cela, l'un des mandrins mobiles 11 est déplacé le long du profilé 12 en se maintenant sur lui par une pression de serrage moindre qui lui permet de glisser jusqu'à atteindre la deuxième position voulue ; le deuxième mandrin mobile 11 reste serré pendant ce temps, mais se desserre quand le premier mandrin mobile 11 a atteint sa deuxième position et a été resserré. Le deuxième mors mobile 11 se déplace le long du profilé avec la pression de serrage permettant le glissement jusqu'à atteindre sa deuxième position déterminée : une deuxième fenêtre d'usinage est alors formée quand le second mandrin mobile 11 s'est resserré, et l'outil 6 accomplit ce deuxième usinage après un déplacement éventuel du portique 1. On procède de même pour toutes les fenêtres d'usinage suivante ; le profilé 12 est libre de se déplacer dans les limites énoncées plus haut sur les mandrins de support 25, en déformant les blocs élastiques 35, qui absorbent les erreurs de formes à l'origine et les autres déformations du profilé 12. On constate que le profilé 12 est maintenu dans un plan horizontal par les mandrins fixes 25, et que les mandrins mobiles 11 (dont l'un est toujours bien serré) prennent le degré de translation et le degré de rotation subsistants du profilé 12. Un montage isostatique est donc conservé pendant tout l'usinage, là où il est accompli, le profilé 12 jouissant d'un montage suffisamment souple ailleurs.

Les fenêtres d'usinage peuvent être exécutées dans n'importe quel ordre le long du profilé 12.

Le deuxième processus d'usinage envisagé est appelé "par bandes et déplacement continu du fenêtrage". Il est appliqué par exemple pour dresser une face complète du profilé 12 sur toute sa longueur. L'une des extrémités dudit profilé 12 est mise en appui sur la butée 38. Ainsi, le profilé 12 est maintenu dans un plan horizontal par les mandrins fixes 25 et à une référence horizontale fixe par la butée 38. Pour éviter des marques de reprise de l'usinage d'une fenêtre à l'autre, les deux bras mobiles 10 sont déplacés simultanément le long du profilé 12 en même temps que l'outil 39, la pression de serrage des mandrins 11 étant réglée pour permettre les glissements. Si la longueur d'usinage excède la portée du porte-outil 5, la traverse 2 est déplacée autour de la colonne 3 à la vitesse voulue.

Un procédé intermédiaire consisterait à effectuer des fenêtrages successifs sur une bande d'usinage, l'outil 39 étant déplacé sans cesse et les mandrins mobiles 11 étant déplacés quand l'outil 39 arrive au bout d'une fenêtre.

## Revendications

1. Machine d'usinage d'un profilé (12) de grande longueur, comprenant un porte-outil (5), une paire de mandrins (11) de serrage du profilé, mobiles le long du profilé, et des mécanismes de déplacement des mandrins et du porte-outil, **caractérisée en ce qu'**elle comprend un support (23) du profilé, comprenant une structure stationnaire (24), et des mandrins (25) de serrage du profilé montés sur la structure stationnaire par des liaisons souples (35).

2. Machine d'usinage d'un profilé de grande longueur selon la revendication 1, **caractérisée en ce que** les mandrins mobiles (11) sont aptes à être déplacés individuellement le long du profilé.

3. Machine d'usinage d'un profilé de grande longueur selon la revendication 1, **caractérisée en ce qu'**elle comprend une colonne centrale (3) stationnaire à laquelle la structure stationnaire (24) est attachée, une paire de bras (10) tournant autour de la colonne (3) et finissant respectivement sur les mandrins mobiles (11), et un portique (1) associé au porte-outil (5) et soutenu par la colonne et par un rail circulaire (4) concentrique à la colonne.

4. Machine d'usinage d'un profilé de grande longueur selon l'une quelconque des revendications 1 à 3, **caractérisée en ce que** la structure stationnaire est composée de bras (24) comprenant des portions coulissantes de longueur totale réglable.

5. Machine d'usinage d'un profilé de grande longueur selon la revendication 4, **caractérisée en ce que** les bras de la structure stationnaire comportent une extrémité (28), porteuse des mandrins stationnaires (25), réglable en rotation autour d'un axe vertical.

6. Machine d'usinage d'un profilé de grande longueur selon l'une quelconque des revendications 1 à 5, **caractérisée en ce que** les mandrins mobiles (11) sont montés sur des supports indépendants (10) et déformables de manière à pouvoir déplacer les mandrins mobiles perpendiculairement au profilé dans un plan du profilé et autour d'un axe de pivotement perpendiculaire au plan du profilé.

7. Machine d'usinage d'un profilé de grande longueur selon l'une quelconque des revendications 1 à 6, **caractérisée en ce que** les mandrins stationnaires (25) sont munis d'un mécanisme d'escamotage.

8. Machine d'usinage d'un profilé de grande longueur selon l'une quelconque des revendications précédentes, **caractérisée en ce que** la structure stationnaire comprend une butée (38) de mise en position d'une extrémité du profilé (12).

9. Machine d'usinage d'un profilé de grande longueur selon l'une quelconque des revendications précédentes, **caractérisée en ce que** le porte-outil (5) est mobile indépendamment des mandrins mobiles.

10. Procédé d'usinage d'un profilé de grande longueur, accompli avec une machine à commande numérique comprenant une paire de mandrins mobiles (11) enserrant des portions successives du profilé et un outil (39) placé entre les mandrins mobiles, **caractérisé en ce que** le profilé (12) reste retenu sur un support à une position sensiblement fixe, et les mandrins mobiles (11) et l'outil se déplacent le long du profilé sur toute une longueur à usiner.

11. Procédé d'usinage d'un profilé de grande longueur selon la revendication 10, **caractérisé en ce que** l'outil se déplace en même temps que les mandrins mobiles (11).

## Claims

1. Machine for machining a long profile (12), comprising a tool holder (5), a pair of mandrels (11) for clamping the profile, free to move along the profile, and devices for moving the mandrels and the tool holder, **characterized in that** it comprises a profile support (23), comprising a stationary structure (24), and profile clamping mandrels (25), mounted on the stationary structure through flexible connections (35).

2. Machine for machining a long profile according to claim 1, **characterized in that** the mobile mandrels (11) can be moved individually along the profile.

3. Machine for machining a long profile according to claim 1, **characterized in that** it comprises a central stationary column (3) to which a stationary structure (24) is fastened, a pair of arms (10) rotating around the column (3) each arm ending on one of the mobile mandrels (11), and a portal (1) combined with the tool holder (5) and supported by the column by a circular rail (4) concentric with the column.

4. Machine for machining a long profile according to any one of the claims 1 to 3, **characterized in that** the stationary structure is composed of arms (24) including sliding sections for which the total length is adjustable.

5. Machine for machining a long profile according to claim 4, **characterized in that** the arms of the stationary structure comprise one end (28), carrying the stationary mandrels (25), that can be adjusted in rotation about a vertical axis.

6. Machine for machining a long profile according to any one of the claims 1 to 5, **characterized in that** the mobile mandrels (11) are mounted on independent supports (10) that can deform so as to move the mobile mandrels perpendicularly to the profile in a plane of the profile and about a pivoting axis perpendicular to the plane of the profile.

7. Machine for machining a long profile according to any one of the claims 1 to 6, **characterized in that** the stationary mandrels (25) are fitted with a retractable device.

8. Machine for machining a long profile according to any one of the preceding claims, **characterized in that** the stationary structure comprises a stop (38) for positioning one end of the profile (12).

9. Machine for machining a long profile according to any one of the preceding claims, **characterized in that** the tool holder (5) moves independently from the mobile mandrels.

10. Method for machining a long profile, accomplished with a numerical control machine including a pair of mobile mandrels (110 clamping successive sections of the profile and a tool (39) placed between mobile mandrels, **characterized in that** the profile (12) remains retained on a support at an approximately fixed position, and the mobile mandrels and the tool move along the profile over an entire length to be machined.

11. Method for machining a long profile, according to claim 10, **characterized in that** the tool moves at the same time as the mobile mandrels (11).

## Patentansprüche

1. Maschine zur Bearbeitung eines Profilteils (12) großer Länge, mit einem Werkzeughalter (5), einem Paar von Spannfuttern (11) des Profilteils, die längs des Profilteils beweglich sind, sowie Mechanismen zum Verschieben der Spannfutter und des Werkzeughalters, **dadurch gekennzeichnet, dass** sie eine Halterung (23) des Profilteils umfasst, die eine stationäre Struktur (24) aufweist, sowie Spannfutter (25) des Profilteils, die an der stationären Struktur über elastische Verbindungen (35) angebracht sind.

2. Maschine zur Bearbeitung eines Profilteils großer Länge nach Anspruch 1, **dadurch gekennzeichnet, dass** die beweglichen Spannfutter (11) einzeln entlang dem Profilteil bewegt werden können.

3. Maschine zur Bearbeitung eines Profilteils großer Länge nach Anspruch 1, **dadurch gekennzeichnet, dass** sie eine zentrale stationäre Säule (3) umfasst, an der die stationäre Struktur (24) angebracht ist, wobei ein Paar Arme (10) sich um die Säule (3) herum drehen und jeweils an den beweglichen Spannfuttern (11) enden, sowie einen Portalrahmen (1), der dem Werkzeughalter (5) zugeordnet ist und von der Säule und einer kreisförmigen, zu der Säule konzentrischen Schiene (4) gehalten wird.

4. Maschine zur Bearbeitung eines Profilteils großer Länge nach einem der Ansprüche 1 bis 3, **dadurch gekennzeichnet, dass** die stationäre Struktur aus Armen (24) besteht, welche Gleitabschnitte mit regelbarer Gesamtlänge umfassen.

5. Maschine zur Bearbeitung eines Profilteils großer Länge nach Anspruch 4, **dadurch gekennzeichnet, dass** die Arme der stationären Struktur ein Ende (28) umfassen, welches stationäre Spannfutter (25) trägt und in seiner Drehung um eine Vertikalachse einstellbar ist.

6. Maschine zur Bearbeitung eines Profilteils großer Länge nach einem der Ansprüche 1 bis 5, **dadurch gekennzeichnet, dass** die beweglichen Spannfutter (11) an unabhängigen Halterungen (10) angebracht sind, und derart verformbar sind, dass die beweglichen Spannfutter senkrecht zu dem Profilteil in einer Ebene des Profilteils und um eine zu der Ebene des Profilteils senkrechte Dreh-/Schwenkachse bewegt werden können.

7. Maschine zur Bearbeitung eines Profilteils großer Länge nach einem der Ansprüche 1 bis 6, **dadurch gekennzeichnet, dass** die stationären Spannfutter (25) mit einem Einziehmechanismus versehen sind.

8. Maschine zur Bearbeitung eines Profilteils großer Länge nach einem der vorangehenden Ansprüche, **dadurch gekennzeichnet, dass** die stationäre Struktur einen Anschlag (38) zur Positionierung eines Endes des Profilteils (12) umfasst.

9. Maschine zur Bearbeitung eines Profilteils großer Länge nach einem der vorangehenden Ansprüche, **dadurch gekennzeichnet, dass** der Werkzeughalter (5) unabhängig von den beweglichen Spannfuttern beweglich ist.

10. Verfahren zur Bearbeitung eines Profilteils großer Länge, das mit einer Maschine mit numerischer Steuerung durchgeführt wird, die ein Paar beweglicher Spannfutter (11) umfasst, welche sukzessive Abschnitte des Profilteils einspannen, sowie ein zwischen den beweglichen Spannfuttern angeordnetes Werkzeug (39), **dadurch gekennzeichnet, dass** das Profilteil (12) an einer Halterung an einer im wesentlichen feststehenden Position festgehalten wird, und die beweglichen Spannfutter (11) und das Werkzeug sich längs des Profilteils auf einer gesamten zu bearbeitenden Länge verschieben.

11. Verfahren zur Bearbeitung eines Profilteils großer Länge nach Anspruch 10, **dadurch gekennzeichnet, dass** das Werkzeug sich gleichzeitig mit den beweglichen Spannfuttern (11) bewegt.
